Europäisches Patentamt

European Patent Office

Office européen des brevets

(19)

(11) Veröffentlichungsnummer: **0 347 765**

**A1**

(12) **EUROPÄISCHE PATENTANMELDUNG**

(21) Anmeldenummer: **89110946.4**

(22) Anmeldetag: **16.06.89**

(51) Int. Cl.⁴: **C10L 5/44 , C10B 53/02 , C07C 11/04**

(30) Priorität: **18.06.88 DE 3820756**

(43) Veröffentlichungstag der Anmeldung:
**27.12.89 Patentblatt 89/52**

(84) Benannte Vertragsstaaten:
**AT DE FR GB IT NL SE**

(71) Anmelder: **Brocks, Klaus**
**Waldschänkenweg 5**
**D-3410 Northeim(DE)**

Anmelder: **Scheffer, Konrad, Prof. Dr. Dipl. agr.**
**Grosser Bruch 15**
**D-3403 Friedland 1(DE)**

Anmelder: **Meier, Heinz**
**Thüdinghäuser Strasse 6**
**D-3413 Moringen 1(DE)**

(72) Erfinder: **Brocks, Klaus**
**Waldschänkenweg 5**
**D-3410 Northeim(DE)**
Erfinder: **Scheffer, Konrad, Prof. Dr. Dipl. agr.**
**Grosser Bruch 15**
**D-3403 Friedland 1(DE)**
Erfinder: **Meier, Heinz**
**Thüdinghäuser Strasse 6**
**D-3413 Moringen 1(DE)**

(74) Vertreter: **Jochem, Bernd, Dipl.-Wirtsch.-Ing.**
**Patentanwälte Beyer & Jochem Postfach 17 01 45**
**D-6000 Frankfurt/Main(DE)**

(54) **Verfahren und Vorrichtung zur Energieerzeugung aus nachwachsenden Rohstoffen.**

(57) Das vorgeschlagene Verfahren zur Energieerzeugung aus nachwachsenden Rohstoffen durch Pyrolyse und/oder Verbrennung sieht vor, daß Biomasse in Silos (10) durch Gärung konserviert und nach Bedarf der Energieerzeugung aus dem Silo (10) entnommen und durch zwei verschiedene Verfahren der Energiegewinnung verarbeitet wird. Beide gehen davon aus, daß die Biomasse eine Presse (16) durchläuft, wo einerseits Preßsaft gewonnen wird, der zu Gäräthanol verarbeitet wird, andererseits ein soweit entsafteter Preßrückstand entsteht, daß dieser einem Pyrolyse- und/oder Verbrennungskessel (34) zur Vergasung und Verbrennung zugeführt werden kann. Die dort erzeugte Wärme kann mittels einer Dampfturbine (48) in elektrischen Strom umgewandelt werden und zur Deckung einer Grundlast dienen. Bei Spitzenbedarf kann eine mit dem erzeugten Äthanol betriebene Gasturbine (56) zugeschaltet werden.

EP 0 347 765 A1

*Fig. 1*

## Verfahren und Vorrichtung zur Energieerzeugung aus nachwachsenden Rohstoffen

Die Erfindung betrifft ein Verfahren zur Energieerzeugung aus nachwachsenden Rohstoffen durch Pyrolyse und/oder Verbrennung.

Zur Energieerzeugung werden außer Kernbrennstoffen immer noch überwiegend nicht erneuerbare fossile Rohstoffe wie Öl, Kohle und Erdgas eingesetzt. Ihre Quellen werden eines Tages erschöpft sein. Darüber hinaus führt die Verbrennung dieser Stoffe zur Steigerung des $CO_2$-Gehalt der Luft ohne Abbaueffekte. Dasselbe gilt für Anlagen, die durch Abfallverbrennung Strom und Wärme erzeugen.

Auch nachwachsende Rohstoffe werden zur Energiegewinnung eingesetzt. Sie werden hierzu erst getrocknet und dann verbrannt und/oder im Wege der Pyrolyse vergast. Außerdem sind Verfahren bekannt, um aus sog. Biomasse brennbare Gase zu gewinnen. Schließlich wird auch schon im industriellen Maßstab, z. B. aus Zuckerrohr, durch Fermentierung, Gärung und Destillation Äthanol als Treibstoff gewonnen.

Alle diese auf nachwachsenden Rohstoffen basierenden Verfahren sind bisher im Vergleich zur Nutzung nicht regenerierbarer fossiler und Kernbrennstoffe unwirtschaftlich, weil sie

a) einzeln je für sich das Energiepotential, das Biomasse bietet, nicht voll ausschöpfen und

b) keine Verfahren bekannt sind, um die verschiedenen Arten der Energiegewinnung verfahrensmäßig und zeitlich bedarfsgerecht miteinander zu kombinieren.

Vielmehr besteht bisher eine zu starke Diskrepanz zwischen den starren zeitlichen Bedingungen der Gewinnung der Rohstoffe, konzentriert auf bestimmte Erntezeitpunkte im Jahr, den industriellen Wirtschaftlichkeitsanforderungen an eine möglichst gleichmäßige Betriebsweise und Kapazitätsauslastung und schließlich auch noch den zeitlichen Schwankungen des Energiebedarfs zwischen Grundlast und Spitzenlast.

Die genannten Schwierigkeiten resultieren zu einem wesentlichen Teil daraus, daß zur optimalen Ausnutzung nachwachsender Rohstoffe zur Energieerzeugung die Gewinnung von Wärme gehört, aber diese setzt entweder bei ungleichmäßigem Ernteanfall, jedoch kontinuierlichem, industriellen Betrieb aufwendige und viel Raum beanspruchende Lager und Trocknungsverfahren voraus oder bedingt bei den Ernteschwankungen angepaßter Verwertung die Notwendigkeit der langfristigen Speicherung der zunächst als Wärme gewonnenen Energie.

Der Erfindung liegt die Aufgabe zugrunde, ein Verfahren und eine Vorrichtung der eingangs genannten Art zu schaffen, welche es gestatten, unter optimaler Ausnutzung des Energiepotentials nachwachsender Rohstoffe Wärmegewinnung und Gewinnung von flüssigen oder gasförmigen Treib- und Brennstoffen auf einfache Weise zu kombinieren, wobei den unterschiedlichen zeitlichen Bedingungen der Gewinnung der Rohstoffe, ihrer Verwertung und des Energiebedarfs besser als bisher Rechnung getragen werden soll.

Vorstehende Aufgabe wird verfahrensmäßig dadurch gelöst, daß die nachwachsenden Rohstoffe durch Silierung konserviert und zur Reduzierung ihrer Feuchte durch Pressen auf ein für die Pyrolyse und/oder Verbrennung geeignetes Maß entsaftet werden, wobei der beim Pressen anfallende Preßsaft zu Gäräthanol als Treib- oder Brennstoff verarbeitet wird.

Die einzelnen Verfahrensschritte haben im Rahmen der Kombination jeweils ihre spezielle Bedeutung. Die Zwischenlagerung in Silos konserviert durch die dort stattfindende Gärung (analog wie bei der Konservierung von Sauerkraut) das Rohmaterial in einer Form, in welcher es auch noch nach längerer Lagerzeit sowohl durch Gewinnung von Preßsaft als auch durch Verbrennung verwertbar ist.

Das erfindungsgemäß vorgeschlagene Bindeglied zwischen den beiden unterschiedlichen Verfahren der Energiegewinnung, nämlich durch Pyrolyse und/oder Verbrennung einerseits sowie Äthanolgewinnung andererseits, ist der Pressvorgang. Hier wird auf dem Weg aus dem Silo zu einem Pyrolyse- und/oder Verbrennungskessel ohne Zeitverlust und ohne die Notwendigkeit weiterer Zwischenlagerung zum Zwecke der Trocknung sofort ein so niedriger Feuchtegehalt, z. B. von etwa 40 bis 45° oder auch weniger, eingestellt, daß sich das Material für die Pyrolyse und/oder Verbrennung eignet.

Entsprechend dem vorstehend beschriebenen Verfahrensgang ist die erfindungsgemäße Vorrichtung dadurch gekennzeichnet, daß sie aus einem Silo zur Aufnahme der geernteten nachwachsenden Rohstoffe, einer über eine erste Fördereinrichtung damit verbundenen Presse zum Entsaften der Rohstoffe bis auf eine für die Pyrolyse und/oder Verbrennung geeignete Feuchte, einem mit der Presse über eine weitere Fördereinrichtung verbundenen Pyrolyse- und/oder Verbrennungskessel und einer an die Presse angeschlossenen, den dort anfallenden Preßsaft aufnehmenden Gär- und Destillationseinrichtung zur Gewinnung von Gäräthanol besteht.

Die vorgeschlagene Vorrichtung kann so ausgelegt werden, daß mit der im Pyrolyse- und/oder Verbrennungskessel gewonnenen Wärmeenergie eine bestimmte Grundlast gedeckt wird. Das gleichzeitig gewonnene Äthanol kann gelagert und zur Deckung des Energiespitzenbedarfs sowie für andere Zwecke, z. B. als Treibstoff, eingesetzt werden.

Nicht alle Pflanzen eignen sich gleichermaßen als nachwachsender Rohstoff für die Energieerzeugung. Bisher wurden normalerweise, aus den jeweiligen Gegebenheiten heraus, bestimmte Arten von Pflanzen für sich allein für die Verwertung zur Energieerzeugung vorgesehen. Dadurch verschärft sich das der Erfindungsaufgabe zugrundeliegende Problem des ungleichmäßigen Anfalls der Ausgangsstoffe. Um dem zu begegnen, werden in bevorzugter praktischer Ausführung des erfindungsgemäßen Verfahrens als nachwachsende Rohstoffe zu einem wesentlichen Teil Wintergetreidepflanzen und zu einem anderen wesentlichen Teil Mais- oder Hirsepflanzen verwendet, welche vor der etwa zur Zeit der Milchreife stattfindenden Ernte der Wintergetreidepflanzen vorgezogen und nach deren Ernte ausgepflanzt werden. In weiterer Ausgestaltung dieses Vorschlag gehören die Mais- oder Hirsepflanzen einer spät reifenden Sorte an und sind zur Zeit ihrer Ernte vor der Aussaat von Wintergetreide noch unausgereift.

Es mag zunächst überraschen, daß solche Pflanzen, wie Wintergetreide, Mais und Hirse, die sonst für die Erzeugung von Grundnahrungsmitteln bestimmt sind und wegen ihrer Früchte angebaut werden, hiermit unbeachtlich der Früchte zur Energiegewinnung aus ihrer Biomasse vorgeschlagen werden, denn diese Pflanzen wirken einzeln nicht sehr schwer und massig. Für sich allein wären sie auch für den vorgesehenen Zweck nicht recht geeignet. Entscheidend für die Durchführung des erfindungsgemäßen Verfahrens ist jedoch auch hinsichtlich des Ausgangsmaterials ein Kombinationsgedanke. Die genannten Pflanzen lassen sich im Verlauf eines Jahres nacheinander bis zur Ernte als Biomasse aufziehen und ergeben zwar nicht einzeln, aber zusammen einen im Vergleich zu anderen Pflanzen besonders hohen Masseertrag pro Hektar Anbaufläche, und dies auch noch auf zwei Erntezeiträume verteilt.

Wenn man schon den Gedanken verfolgt, zwei Ernten im Jahr erzielen zu wollen, mag es zunächst auch merkwürdig erscheinen, daß hier der Einsatz spät reifender Sorten vorgeschlagen wird, denn deren Anbau steht normalerweise einem für die vorgesehenen Zwecke praktikablen Fruchtwechsel im Wege. Dennoch ist die Verwendung spät reifender Sorten als Ausgangsmaterial für das erfindungsgemäße Verfahren vorteilhaft, weil sie normalerweise in der Phase des Wachstums einen größeren Zuwachs an Masse haben als die früher reifenden Sorten und ohnehin vor dem Ausreifen geerntet werden.

Die genannten Pflanzenarten haben im Zusammenhang mit dem erfindungsgemäßen Verfahren den weiteren Vorzug, daß sie von vornherein verhältnismäßig kleinstückig sind und daher keiner oder nur einer leicht und einfach durchzuführenden weiteren Verarbeitung oder Aufschließung bedürfen, um gepreßt und verbrannt oder vergast werden zu können. Es erscheint lediglich zweckmäßig, das Material vor dem Pressen noch etwas weiter zu zerkleinern und/oder durch Dampfbehandlung aufzuschließen, um die Entsaftung beim Pressen zu fördern.

In weiterer bevorzugter Ausgestaltung des erfindungsgemäßen Verfahrens wird nicht nur der Preßsaft, sondern auch der bei der Silierung anfallende Sickersaft zur Gäräthanol verarbeitet. Darüber hinaus kann je nach der gewünschten Aufteilung der erzeugten Energie auf Wärmeenergie für eine Grundlast und lagerfähige chemische Energie in Form von Treib- oder Brennstoff auch aus einem Teil der bei der Pyrolyse anfallenden Gase über die Bildung von Äthylen und durch katalytische Wasseranlagerungen weiteres Äthanol als Syntheseäthanol erzeugt werden.

Nachdem beim erfindungsgemäßen Verfahren zur besseren Ausschöpfung des Energiepotentials der Biomasse die gesamte Energieerzeugung aufgeteilt worden ist in zwei parallel und simultan stattfindende Energiegewinnungsverfahren, nämlich Wärmegewinnung durch Verbrennung und Gewinnung von Äthanol durch Gärung und Destillation, können, wenn letztlich elektrische Energie erzeugt werden soll, in weiterer bevorzugter Ausgestaltung der Erfindung beide zuvor genannten Energiearten dadurch wieder vereinigt werden, daß mittels der Wärmeenergie Heißdampf zum Antrieb eines mit einer Dampfturbine gekoppelten elektrischen Generators erzeugt wird und durch Verbrennung des Gäräthanols eine Gasturbine antreibbar ist, welche mit demselben elektrischen Generator kuppelbar ist wie die Dampfturbine.

Außer den bereits genannten Vorteilen der Erfindung ist festzustellen, daß diese im Gegensatz zu allen anderen Arten der Energieerzeugung durch Verbrennung keine schädigenden Auswirkungen auf die Umwelt hat. Die Luft wird nicht durch $CO_2$ belastet, weil die Pflanzen für ihr Wachstum der Atmosphäre genauso viel $CO_2$ entziehen wie bei der Verbrennung der Biomasse und der daraus gewonnenen Brenn- und Treibstoffe entsteht. Boden und Grundwasser werden geschont, weil das mit den genannten Pflanzen oder nach demselben Schema mit anderen geeigneten Pflanzen durchgeführte Verfahren der Bodenerosion, dem Nitrateintrag, der Gülleüberdüngung und dem sonst vielfach üblichen starken Einsatz chemischer Pflanzenschutzmittel entgegenwirkt. Es besteht nämlich die Möglichkeit, z. B. Mais oder Zuckerhirse direkt in die Stoppeln einer zuvor geernteten Winterfrucht einzupflanzen. Dadurch entstehen keine Anbaupausen, der Boden ist ständig bewachsen und vor Erosion geschützt. Gülle kann effektiv genutzt und Nitrat nicht mehr in großen Mengen in den Boden eingewaschen werden. Schließlich kann beim Anbau von Pflanzen allein zum Zwecke der Gewinnung von Biomasse weitgehend auf chemische Pflanzenschutzmittel verzichtet werden.

Berechnungen haben ergeben, daß etwa 5.000 Hektar Ackerfläche gebraucht werden, um ein 20 MW-Kraftwerk betreiben zu können und damit ca. 40.000 Einwohner mit elektrischem Strom und Fernwärme zu versorgen.

Die Erfindung wird nachstehend anhand der Zeichnung näher erläutert. Es zeigen:

Fig. 1 eine schematische Darstellung einer Anlage zur Erzeugung elektrischer Energie aus Biomasse;

Fig. 2 ein Diagramm zur Veranschaulichung der Gewinnung von Biomasse im Laufe eines Jahres;

Fig. 3 eine systematische Darstellung einer in Verbindung mit dem erfindungsgemäßen Verfahren zu praktizierenden artenreichen, immergrünen Fruchtfolge.

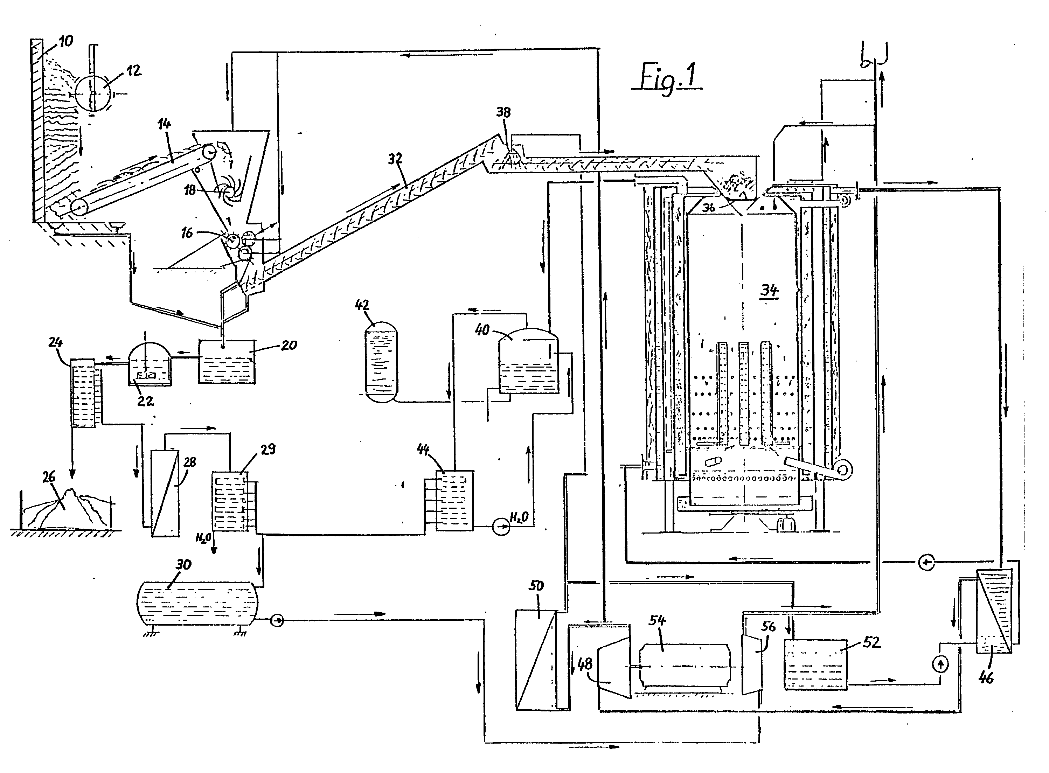

Zu der in Fig. 1 gezeigten Anlage gehören zunächst ein oder mehrere Silos 10 zur Aufnahme der als Biomasse bezeichneten pflanzlichen Rohstoffe. Es kann ein Silageschneider 12 vorhanden sein, mit welchem die Pflanzen bei der Einlagerung in den Silo 10 zerkleinert werden. Die Biomasse wird im Silo feucht konserviert und kann längere Zeit darin verbleiben, bis sie während der nachfolgend beschriebenen Energiegewinnung je nach deren Bedarf über eine Fördereinrichtung 14 aus dem Silo 10 entnommen wird.

Die noch frische und/oder bereits konservierte Biomasse wird bei der Verwertung zunächst einer Presse 16 zugeführt. Hierbei handelt es sich vorzugsweise um eine Walzenpresse. Zur besseren Aufschließung des Materials kann dieses vor oder während des Durchlaufs durch die Presse 16 mit heißem Dampf behandelt werden, wozu es ggf. genügt, wenigstens eine der Walzen der Presse 16 zu beheizen. Der Vergleichmäßigung und besseren Aufschließung der auszupressenden Biomasse dient im Beispielsfall auch eine der Walzenpresse 16 vorgeschaltete Reißeinrichtung 18.

Der in der Walzenpresse 16 anfallende Preßsaft sowie auch der sich in den Silos 10 sammelnde Sickersaft werden einem Sammelbehälter und Fermenter 20 zugeleitet. An diesen ist ein Gärbehälter 22 angeschlossen und daran wiederum eine Einrichtung 24 zur Mikrofiltration. Es ist bedeutsam, daß der Preßsaft aus den faserigen Ausgangsmaterialien frei von Schlempe ist, so daß außer der bei der Mikrofiltration anfallenden Hefe 26, die wertvolles Viehfutter darstellt, keine störenden Abfallprodukte entstehen.

Die filtrierte Flüssigkeit wird anschließend in einer Destillationseinrichtung 28 destilliert. Zur Steigerung der Ausbeute an Gäräthanol kann auch noch ein Pervaporator 29 angeschlossen werden. Das auf diese Weise gewonnene Äthanol wird in einem oder mehreren Tanks 30 gelagert.

Nach dem Entsaften durch Pressen hat der Preßrückstand nur noch eine Feuchte von etwa 40 bis 45 % oder sogar noch weniger. Diese Feuchte, die sonst nur durch langwierige oder teure Trocknung zu erreichen wäre, ohne daß dabei durch Fermentierung und Gärung Äthanol gewonnen werden könnte, reicht für die beabsichtigte nachfolgende Verbrennung und/oder Pyrolyse des Materials aus. Hierzu wird es im Beispielsfall über Schnekkenförderer 32 einem Pyrolyse- und Verbrennungskessel 34 mit Gattierungsklappen 36 am Einlaß zugeführt. Zur Beeinflussung der Verbrennung und Pyrolyse kann dem Kessel 34 noch eine Feuchteeinstellstation 38 vorgeschaltet sein, in welcher die Feuchte des Preßrückstands gemessen und ggf. durch Zugabe von Wasser auf einen vorbestimmten Wert eingestellt wird.

Im Kessel 34 findet eine Verbrennung und Vergasung des auf eine bestimmte Feuchte eingestellten Preßrückstands statt.

Zweck der Vergasung ist es, die Brennstoffe, wie Mais, Getreide oder Zuckerhirse in eine feuerungstechnisch günstigere Form zu bringen und unerwünschte Bestandteile abscheiden zu können. Die Vergasungsmittel sind in diesem Fall mit Luft zugeführter Sauerstoff und über die Restfeuchte entstehender Wasserdampf. So entsteht ein Generatorgas genanntes Luft-, Gas- und Wassergemisch.

Der Kessel 34 ist im Beispielsfall ein senkrechter Schachtofen, der in seinem Füllgrad zwischen 65 % und 75 % schwankt. In seinem unteren Bereich wird über Ringschlitze ständig Gas abgezogen. Im mittleren Bereich entsteht zunächst $CO_2$ aus dem Kohlenstoff der Pflanzen und dem Sauerstoff der heißen Luft. Das $CO_2$ wird stetig in sauerstoffarmen Bereichen von Kohlenstoff des Brennstoffes zu CO reduziert.

Diesen Vorgang begleitet eine Zersetzung des mitgeführten Wasserdampfes in Gegenwart glühenden Kohlenstoffs in $H_2$ und Bindung zu CO. Diese Art der Vergasung ist eine absteigende oder auch Gleichstromvergasung.

Durch eine Erhöhung oder Erniedrigung des Wassergehaltes kann man das Verhältnis zwischen $H_2$ und CO im fertigen Gas beeinflussen. Mengt man $CO_2$ statt eines Teiles Wasserdampfes, d. h. Wassers, so erhöht sich ebenfalls der Kohlenmonoxidanteil auf Kosten des Wasserstoffanteiles im Gas.

Der $N_2$-Gehalt des Abgases bewirkt dann eine geringe Heizwertminderung des Generatorgases.

Je geringer der Wasseranteil, desto höher ist die Vergasungstemperatur und somit auch die Reaktionsneigung des Kohlenstoffes, d. h., die Geschwindigkeit und die Elastizität (Anpassung an Belastungsschwankungen) der Vergasung.

Mit der Steigerung der Temperatur wird auch der Zersetzungsgrad des Brennstoffes und dessen Feuchteträgers erhöht und so der $H_2$-Anteil des Gases gesteigert. Die Luftvorwärmung stützt diese Temperatursteigerung. Um die Reaktionszeiten in einer bestimmten Zone gezielt zu beeinflussen und eine örtliche Temperaturgestaltung in der Glutzone zu erreichen, wird gezielt über Düsen und ringförmig angeordnete Düsenstöcke das Vergasungsmittel "vorerhitzte Luft" eingeblasen.

Eine Vergasung ist bis zu etwa 40 bis 45 % Feuchte möglich. Der Winddruck bewegt sich zwischen 50 mm und 80 mm Ws. Es wird ein Brennwert von 3,2 kWh/kg Trockenmasse erwartet. Dieser Brennwert könnte auf bis zu 4,2 kWh/kg gesteigert werden.

Während des vorstehend beschriebenen Verbrennungs- und Vergasungsvorgangs liefert der Kessel Wärme auf dem Niveau von etwa 320° Celcius, wobei sich die Wärmemenge danach richtet, zu welchem Anteil die gebildeten brennbaren Gase im Kessel verbrannt oder aus dem Kessel heraus abgeleitet werden. Von letzterer Möglichkeit kann dann Gebrauch gemacht werden, wenn die Grundlast des Wärmebedarfs, auch für die Stromerzeugung, niedrig ist. In diesem Fall werden die Reaktionen in der Wirbelzone so eingestellt, daß über FeO-Katalyse Äthylen gebildet wird. Wenn anschließend katalytisch Wasser angekettet wird, wobei als Katalysator 60 bis 80 prozentige Schwefelsäure in Frage kommt, erhält man synthetisches Äthanol.

Die für die Synthetisierung des Äthanols notwendige Einrichtung ist ebenfalls in Fig. 1 dargestellt. Sie besteht aus einem Äthanolreaktor 40, dem das im Kessel 34 gebildete Äthylen zugeleitet wird. Außerdem wird dem Äthanolreaktor 40 Schwefelsäure aus einem Vorratstank 42 zugeleitet. Dem Äthanolreaktor 40 ist ein Pervaporator 44 nachgeschaltet. Das synthetisch erzeugte Äthanol wird dann ebenso wie das Gäräthanol in Tanks 30 gelagert.

Wenn die Verbrennung im Kessel 34 so eingestellt wird, daß alle dabei entstehenden brennbaren Gase dort auch bereits verbrannt werden, entfällt die Einrichtung 40, 42, 44 zur Erzeugung von synthetischem Äthanol.

Im Beispielsfall wird die im Kessel 34 erzeugte Wärme zunächst auf durch den Kesselmantel und einen Wärmetauscher 46 zirkulierendes Wärmetauscheröl übertragen. Der Wärmetauscher 46 dient als Dampferzeuger. Der Dampf treibt eine Dampfturbine 48, wird in einem Kondensator 50 kondensiert und das dort gebildete Wasser über einen Wasserbehälter 52 zum Wärmetauscher 56 zurückgeleitet. Es besteht die Möglichkeit, diesen auch als Wärmespeicher auszugestalten, andererseits aber auch die weitere Möglichkeit, mit der Kesselwärme unmittelbar Wasserdampf zu erzeugen.

Die Dampfturbine 48 treibt in bekannter Weise einen elektrischen Generator 54 an. Vorzugsweise ist die Antriebswelle desselben Generators 54 auch noch mit einer Gasturbine 56 kuppelbar, welche durch Vergasung und Verbrennung des in den Tanks 30 lagernden Äthanols antreibbar ist. Die Gasturbine 56 kann bei Spitzenlast jederzeit zugeschaltet werden. Die noch heißen Abgase können hinter der Gasturbine 56, wie in der Zeichnung angedeutet, teilweise oben in den Kessel 34 eingeleitet werden.

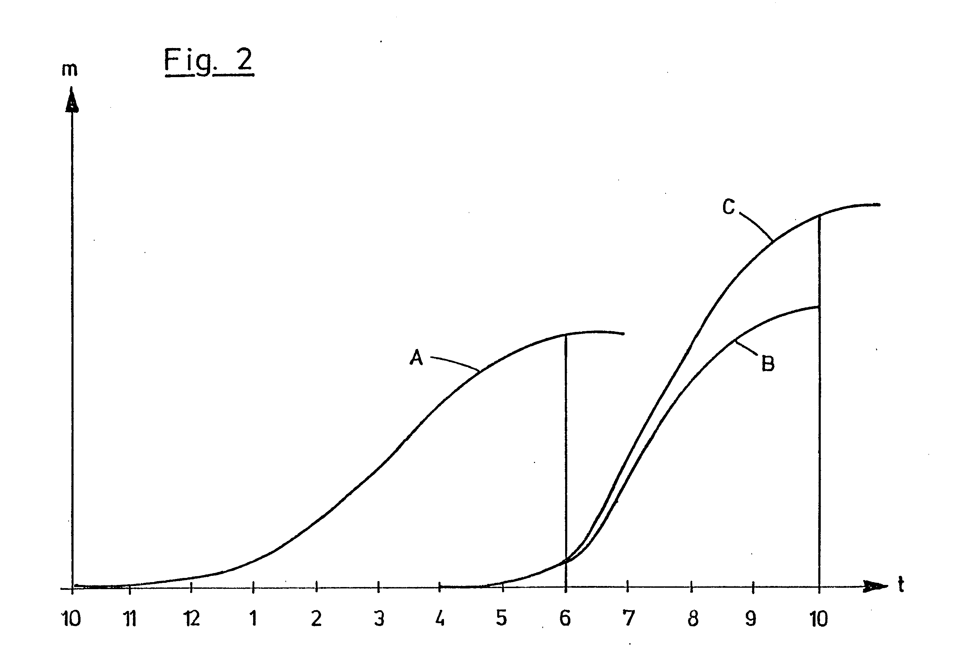

Fig. 2 veranschaulicht die Reifungs- und Erntevorgänge der zum Einsatz kommenden nachwachsenden Rohstoffe im Laufe eines Jahres. Auf der Abszisse ist die Zeit in Monaten und auf der Ordinate die Masse der auf einer Flächeneinheit Ackerland gezogenen Pflanzen aufgetragen. Die Kurve A kennzeichnet das Wachstum von Wintergetreide zwischen der Aussaat im Oktober und der Ernte im Juni des folgenden Jahres. Noch bevor das Getreide geerntet wird, beginnt im Gewächshaus oder Folientunnel die Anzucht von Maispfanzen oder Zuckerhirse, vorzugsweise gemäß EP-A1 -97735. Diese vorgezogenen Pflanzen werden unmittelbar nach der Ernte des Wintergetreide zwischen dessen Stoppfeln gepflanzt. Das Wintergetreide wird vorzugsweise im Zustand der Milchreife geerntet.

Die Kurven B und C kennzeichnen das Wachstum einer früher bzw. später reifenden Maissorte. Man erkennt, daß die später reifende Maissorte gemäß Kurve C zur Zeit der Ernte im Oktober noch nicht denselben Reifegrad erreicht hat wie die früher reifende Sorte gemäß Kurve B, aber den größeren Ertrag an Biomasse liefert, worauf es für die Erfindung ankommt.

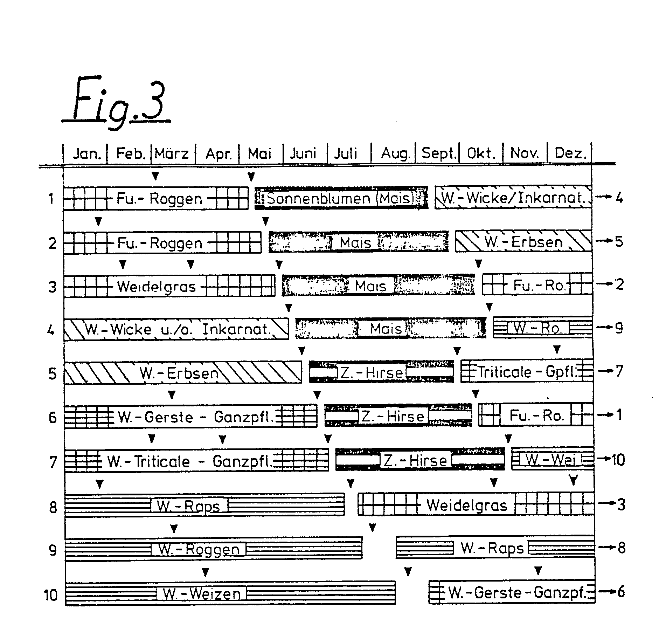

In Fig. 3 ist für eine 10-Felder-Wirtschaft eine immergrüne Fruchtfolge mit optimaler Gülleverteilung (siehe Pfeilspitzen zwischen den Zeilen) dargestellt. Am Ende jeder ein Feld repräsentierenden Zeile ist durch einen Pfeil mit einer Ziffer angegeben, die Fruchtfolge welcher Zeile im nächsten Jahr auf dem betreffenden Acker folgt. Wie ersichtlich, sind die Felder über das ganze Jahr hinweg bewachsen und liefern mit den angegebenen Arten, insbesondere den überwinternden Vorfrüchten Gras, Grünroggen und unreifem Getreide sowie den gepflanzten Zweitfrüchten Mais und Hirse einen großen Ertrag an erfindungsgemäß nach dem Pressen zu Äthanol zu verarbeitender und zu verbrennender Biomasse.

Abschließend ist festzustellen, daß sämtliche Rückstände und Abgase, die bei dem erfindungsgemäßen Verfahren entstehen, während des Pflanzenwachstums der Umgebung entzogen wurden und nach der Energiegewinnung wieder der Umgebung zugeführt werden, so daß ein Kreislauf der Materie zustande kommt. Es kann z. b. nicht mehr Kohlendioxid ausgestoßen werden, als vorher die Pflanzen während ihrer Wachstumsphase der Atmosphäre entzogen haben. Auch die von den Pflanzen dem Boden entzogenen Mineralstoffe werden diesem wieder zurückgegeben, indem die bei der Verbrennung anfallende Asche als Düngemittel genutzt wird.

**Ansprüche**

1. Verfahren zur Energieerzeugung aus nachwachsenden Rohstoffen durch Pyrolyse und/oder Verbrennung, **dadurch gekennzeichnet,** daß die nachwachsenden Rohstoffe durch Silierung konserviert und zur Reduzierung ihrer Feuchte durch Pressen entsaftet werden, wobei der beim Pressen anfallende Preßsaft zu Gäräthanol als Treib- oder Brennstoff verarbeitet wird.

2. Verfahren nach Anspruch 1, **dadurch gekennzeichnet,** daß als nachwachsende Rohstoffe zu einem wesentlichen Teil Wintergetreidepflanzen und zu einem anderen wesentlichen Teil Mais- oder Hirsepflanzen verwendet werden, welche vor der etwa zur Zeit der Milchreife stattfindenden Ernte der Wintergetreidepflanzen vorgezogen und nach deren Ernte ausgepflanzt werden.

3. Verfahren nach Anspruch 2, **dadurch gekennzeichnet,** daß die Mais- oder Hirsepflanzen einer spät reifenden Sorte angehören und zur Zeit ihrer Ernte vor der Aussaat von Wintergetreide noch unausgereift sind.

4. Verfahren nach einem der Ansprüche 1 bis 3, **dadurch gekennzeichnet,** daß auch der bei der Silierung anfallende Sickersaft zu Gäräthanol verarbeitet wird.

5. Verfahren nach einem der Ansprüche 1 bis 4, **dadurch gekennzeichnet,** daß die nachwachsenden Rohstoffe nach der Silierung, vor dem Pressen zerkleinert werden.

6. Verfahren nach einem der Ansprüche 1 bis 5, **dadurch gekennzeichnet,** daß die nachwachsenden Rohstoffe nach der Silierung, vor oder bei dem Pressen durch Dampfbehandlung aufgeschlossen werden.

7. Verfahren nach einem der Ansprüche 1 bis 6, **dadurch gekennzeichnet,** daß aus einem Teil der bei der Pyrolyse anfallenden Gase über die Bildung von Äthylen und katalytische Wasseranlagerung Syntheseäthanol erzeugt wird.

8. Verfahren nach einem der Ansprüche 1 bis 7, **dadurch gekennzeichnet,** daß mittels der bei der Pyrolyse und/oder Verbrennung der entsafteten nachwachsenden Rohstoffe entstehenden Wärme in einem mit einem Wärmespeicher verbundenen Wärmetauscher (46) Heißdampf zum Antrieb eines mit einer Dampfturbine (48) gekoppelten elektrischen Generators (54) erzeugt wird.

9. Verfahren nach Anspruch 8, **dadurch gekennzeichnet,** daß durch Verbrennung des Gäräthanols eine Gasturbine (56) antreibbar ist, welche mit demselben elektrischen Generator (54) kuppelbar ist wie die Dampfturbine (48).

10. Vorrichtung` zur Energieerzeugung aus nachwachsenden Rohstoffen durch Pyrolyse und/oder Verbrennung, **dadurch gekennzeichnet,** daß sie aus einem Silo (10) zur Aufnahme der geernteten nachwachsenden Rohstoffe, einer über eine erste Fördereinrichtung (14) damit verbundenen Presse (16) zum Entsaften der Rohstoffe bis auf eine für die Pyrolyse und/oder Verbrennung geeignete Feuchte, einem mit der Presse (16) über eine weitere Fördereinrichtung verbundenen Pyrolyse- und/oder Verbrennungskessel (34) und einer an die Presse (16) angeschlossenen, den dort anfallenden Preßsaft aufnehmenden Gär- und Destillationseinrichtung (20 - 29) zur Gewinnung von Gäräthanol besteht.

Fig.1

Fig. 2

EP 0 347 765 A1

# Fig.3

| | Jan. | Feb. | März | Apr. | Mai | Juni | Juli | Aug. | Sept. | Okt. | Nov. | Dez. |
|---|---|---|---|---|---|---|---|---|---|---|---|---|

1   ┤├─ Fu.- Roggen ─┤├   Sonnenblumen (Mais)   W.-Wicke/Inkarnat.   → 4

2   ┤├─ Fu.- Roggen ─┤├   Mais   W.-Erbsen   → 5

3   ┤├─ Weidelgras ─┤├   Mais   Fu.- Ro.   → 2

4   W.-Wicke u./o. Inkarnat.   Mais   W.-Ro.   → 9

5   W.-Erbsen   Z.-Hirse   Triticale - Gpfl.   → 7

6   W.-Gerste - Ganzpfl.   Z.-Hirse   Fu.- Ro.   → 1

7   W.-Triticale - Ganzpfl.   Z.-Hirse   W.-Wei   → 10

8   W.-Raps   Weidelgras   → 3

9   W.-Roggen   W.-Raps   → 8

10   W.-Weizen   W.-Gerste-Ganzpf.   → 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A- 731 394 (KRUPP GRUSON)<br>* Zusammenfassung 1,2; Seite 1, Zeile 53 - Seite 2, Zeile 20 *<br>--- | 1,4,8-10 | C 10 L 5/44<br>C 10 B 53/02<br>C 07 C 11/04 |
| Y | DE-C- 488 229 (SCHWEIZER)<br>* Anspruch 1; Figur 1 *<br>--- | 1,4,8-10 | |
| A,D | EP-A-0 097 735 (KAISER)<br>* Anspruch 1; Figuren 1-3 *<br>--- | 2,3 | |
| A | GB-A- 711 912 (RUHRCHEMIE)<br>* Anspruch 1; Seite 1, Zeilen 12-18 *<br>--- | 7 | |
| A | KIRK-OTHMER: "Encyclopedia of Chemical Technology", Band 9, 1980, Ausgabe 3, "Enamels, Procelain, or Vitreous to Ferrites", Seiten 342-355, John Wiley & Sons, New York, US<br>* Seite 344, unten - Seite 346 *<br>--- | 7 | |
| A | * Seiten 352-355 *<br>--- | 1 | **RECHERCHIERTE SACHGEBIETE (Int. Cl.4)** |
| A | DE-C- 599 501 (KRUPP GRUSON)<br>* Anspruch 1 *<br>--- | 1 | C 10 B<br>C 10 L<br>C 07 C<br>F 23 G<br>A 01 F |
| A | CH-A- 246 214 (BATA)<br>* Anspruch *<br>----- | 6 | |

Der vorliegende Recherchenbericht wurde für alle Patentansprüche erstellt

| Recherchenort | Abschlußdatum der Recherche | Prüfer |
|---|---|---|
| DEN HAAG | 21-09-1989 | MEERTENS J. |

EPO FORM 1503 03.82 (P0403)